# EUROPÄISCHE PATENTSCHRIFT

(11) **EP 2 262 705 B1**
(45) Veröffentlichungstag und Bekanntmachung des Hinweises auf die Patenterteilung: **21.11.2012**
(21) Anmeldenummer: 09717080.7
(22) Anmeldetag: 06.03.2009
(51) Int. Cl.: B65G 39/09, F16C 35/073

(54) **LAGERANORDNUNG FÜR EINE TRAGROLLE**
BEARING ARRANGEMENT FOR A LOAD-BEARING ROLLER
ENSEMBLE PALIER POUR UN ROULEAU PORTEUR

(30) Priorität: 07.03.2008 DE 102008013131
(43) Veröffentlichungstag der Anmeldung: 22.12.2010
(73) Patentinhaber: AB SKF, 415 50 Göteborg (SE)
(72) Erfinder: HORLING, Peter, 97453 Schonungen-Mainberg (DE); PICKEL, Edgar, 97334 Sommerach (DE)
(74) Vertreter: Schonecke, Mitja
(86) Internationale Anmeldenummer: PCT/EP2009/001630
(87) Internationale Veröffentlichungsnummer: WO 2009/109399

(56) Entgegenhaltungen:
- CH-A5- 696 354
- GB-A- 1 589 904
- GB-A- 2 038 450

## Beschreibung

Die Erfindung betrifft eine Lageranordnung für eine Tragrolle, gemäß dem Oberbegriff des Anspruchs 1, wie sie aus der GB 20 38450 A bekannt ist.

Für die Lagerung von Tragrollen sind im Stand der Technik diverse Möglichkeiten bekannt. Zumeist wird eine gut dämpfende Lagerung der Tragrolle angestrebt, so dass die Lageranordnung mit einer Schicht aus Dämpfungsmaterial zwischen einem Tragrollenmantel und dem zumeist als Wälzlager ausgeführten Lager versehen werden kann. Die DE 1 738 837 U offenbart eine gattungsgemäße Lageranordnung. Die DE 28 01 879 A1 zeigt eine ähnliche Lageranordnung, wobei das Lager über eine elastomere Zwischenschicht eine Hülse trägt. Die Hülse verbreitert sich in einem axialen Endbereich radial und ist mit ihrem radial äußeren Bereich an der zylindrischen Innenfläche des Tragrollenmantels angeschweißt.

Nachteilig ist bei vorbekannten Lösungen folgendes: Die Tragrollen sind im Betrieb einer erheblichen Belastung ausgesetzt, so dass sie nur für eine gewisse Standzeit einsatzfähig sind. Dann müssen sie gewechselt werden. Zumeist wird dabei die gesamte Tragrollenanordnung samt Lagerung ersetzt. Dies erfolgt insbesondere deshalb, weil sich ein Lagerwechsel zumeist unter schwierigen Umgebungsbedingungen aufwändig gestalten würde, wenn es beispielsweise um die Lagerung eines längeren Förderbandes für Schüttgut geht.

Der Wechsel der Lager wäre unter derartigen Umständen eine zeitraubende und somit kostspielige Sache. Auch sind bisher die Recyclebarkeit der Tragrollenanordnung und gegebenenfalls deren Reparatur schwierig bzw. nicht möglich.

Der Erfindung liegt daher die **Aufgabe** zu Grunde, eine Lageranordnung der eingangs genannten Art so fortzubilden, dass es möglich wird, in ökonomischerer Weise den Aufbau und den Unterhalt gattungsgemäßer Tragrollenanordnungen zu ermöglichen. Dabei geht es auch darum, in einfacher Weise und damit schnell und kostengünstig eine Montage und einen Wechsel einer Lageranordnung vornehmen zu können. Damit soll auch die Recyclebarkeit der Tragrollenanordnung ermöglicht bzw. verbessert werden.

Die **Lösung** dieser Aufgabe wird die im Anspruch 1 angegebene Merkmalskombination vorgeschlagen.

Das Montageelement weist dabei bevorzugt eine zylindrische Außenfläche auf. Ferner, kann das Montageelement als rohrförmiger Körper ausgebildet sein.

In einem axialen Endbereich des Lagerinnenrings kann ein Sprengring angeordnet sein, der mit einer radial innenliegenden Auflagefläche auf der Außenfläche des Montageelements in axiale Richtung gleiten kann.

In mindestens einem axialen Endbereich des Lagerinnenrings kann weiterhin ein Dichtelement angeordnet sein, das zusammen mit dem Lagerinnenring auf dem Montageelement in axiale Richtung verschiebbar angeordnet ist.

Das Lager kann ferner radial von einem Stützkörper umgeben sein, wobei der Stützkörper in seinem radial äußeren Bereich an den Tragrollenmantel grenzt. Zwischen dem radial äußeren Bereich des Stützkörpers und der innenzylindrischen Fläche des Tragrollenmantels ist eine Dämpfungsschicht angeordnet. Die Dämpfungsschicht muss von einer Hülse umgeben werden, die in die innenzylindrische Fläche des Tragrollenmantels einschiebbar ist. Diese Hülse kann an einem axialen Ende eine sich radial nach außen erstreckende flanschartige Verbreiterung aufweisen; diese ist bevorzugt zur Anlage an ein axiales Ende des Tragrollenmantels ausgebildet.

Bevorzugt ist vorgesehen, dass die Hülse im montierten Zustand mit Presspassung in dem Tragrollenmantel sitzt.

Die Lageranordnung kann weiterhin einen Deckel aufweisen, der mit dem Stützkörper oder der Dämpfungsschicht drehfest verbunden ist. Der Deckel kann in seinem radial innenliegenden Endbereich in einem nutartig ausgebildeten Spalt angeordnet sein, der in ein Dichtelement eingebracht ist. Das Dichtelement kann dabei zusammen mit dem Lagerinnenring auf dem Montageelement in axiale Richtung verschiebbar angeordnet sein.

Der Deckel kann von einem axial vorspringenden Abschnitt der Dämpfungsschicht radial eingefasst werden.

Die Dämpfungsschicht besteht bevorzugt aus einem Elastomer, insbesondere aus Polyurethan. Sie kann auch aus einem Gummimaterial bestehen. Besonders bewährt hat sich als Gummimaterial NBR mit einer Shore-Härte von mindestens 40. Der Stützkörper und die Hülse bestehen indes zumeist aus Metall, insbesondere aus Stahl.

Das Lager ein zumeist ein Wälzlager.

Der Tragrollenmantel kann als Rohr konstanter Wanddicke ausgebildet sein, das in beiden axialen Endbereichen mit je einem Lager gelagert ist.

Besonders vorteilhaft für die Montage ist es, wenn weiter vorgesehen wird, dass die genannten Bestandteile der Lageranordnung als bauliche Einheit ausgebildet sind, die axial verschieblich auf dem Montageelement angeordnet sind.

Der Kerngedanke der Erfindung stellt also darauf ab, ein Montageelement zur Verfügung zu stellen, auf dem die gesamte Lageranordnung platziert wird, die in einen Tragrollenmantel montiert werden muss, wobei durch axiales Abschieben vom Montageelement der Montagevorgang erfolgt. Dabei ist angestrebt und bevorzugt vorgesehen, dass alle Bauteile bzw. Bestandteile der Lageranordnung zu einer baulichen Einheit zusammengefasst bzw. zu einer solchen verbunden sind. Die Lageranordnung samt Lager, Dichtungselementen, einem Deckel und einem Sicherungselement (Sprengring) kann somit durch Abschieben vom Montageelement als Einheit montiert werden, was eine wesentliche schnellere Montage der Lageranordnung ermöglicht.

In der Zeichnung ist ein Ausführungsbeispiel der Erfindung dargestellt. Die einzige Figur zeigt im Radialschnitt eine Lageranordnung auf einem Montageelement, die auf eine Welle bzw. in einen Tragrollenmantel montiert werden soll.

In der Figur ist eine Lageranordnung 1 zu sehen, die dazu dient, eine Tragrolle einer Fördereinrichtung zu lagern. Die Tragrolle hat einen Tragrollenmantel 2 mit einer innenzylindrischen Fläche 3, in die die Lageranordnung 1 durch Einschieben in axiale Richtung a zu montieren ist. Die Lageranordnung 1 wird im radial inneren Bereich auf einer Welle 20 montiert, die in der Figur mit gestrichelten Linien angedeutet ist.

In der unteren Bildhälfte der Figur ist dabei der Zustand kurz nach Beginn des Montagevorgangs der Lageranordnung 1 zu sehen; hier ist die Lageranordnung 1 gerade erst ein kurzes Stück in den Tragrollenmantel 2 eingeschoben worden. In der oberen Bildhälfte der Figur ist der fertig montierte Zustand der Lageranordnung 1 in den Tragrollenmantel 2 zu sehen.

Die Lageranordnung 1 besteht aus einem Lager 4, das hier als Rillenkugellager ausgebildet ist. Das Lager 4 weist einen Lagerinnenring 5 auf. Beidseitig des Lagers 4 befinden sich Dichtelemente 10 bzw. 11, die durch entsprechende Spaltbildung zu angrenzenden Baueilen eine Dichtwirkung entfalten. Das Dichtelement 10 ist dabei als Labyrinthdichtung ausgeführt, d. h. es weist zwei zusammenwirkende Bauteile auf, die eine Anzahl mäanderförmig verlaufende Spalte bilden und so den Dichteffekt erzeugen.

Der Außenring des Lagers 4 samt Dichtelementen 10, 11 sitzen in einer zylindrischen Sitzfläche eines Stützkörpers 12. Dieser weist in seinem radial äußeren Bereich eine Dämpfungsschicht 13 aus elastomerem Material auf, die wiederum von einer dünnen Hülse 14 eingefasst ist. Die Hülse 14 hat an einem axialen Ende eine flanschartige Verbreiterung 15, die als axialer Anschlag zur Anlage an dem Tragrollenmantel 2 fungiert (s. obere Bildhälfte der Figur).

Vorgesehen ist ferner ein Deckel 16, der mit der Dämpfungsschicht 13 verbunden ist. Hierzu weist die Dämpfungsschicht 13 einen axial vorspringenden Abschnitt 19 auf, der den radial äußeren Bereich des Deckels 16 von außen umgreift und somit nicht nur mechanisch hält sondern ihn auch abdichtet. Der Deckel 16 läuft in seinem radial inneren Endbereich in einem nutartig ausgebildeten Spalt 17, der in ein Dichtelement 18 eingearbeitet ist, das axial neben dem Dichtelement 10 angeordnet ist.

Zur axialen Fixierung der Lageranordnung 1 im montierten Zustand ist noch ein Sprengring 8 vorgesehen, der direkt neben der (linken) Stirnseite des Lagerinnenrings 5 sitzt. Die Welle 20 hat - was nicht dargestellt ist - eine korrespondierende Nut, in die der Sprengring 8 einschnappen kann, wenn sich die Lageranordnung 1 bezüglich der Welle 20 in der richtigen axialen Lage befindet.

Wesentlich ist, dass die Lageranordnung 1 ein Montageelement 6 in Form eines Rohres umfasst, also ein Montagerohr, das jedenfalls den Lagerinnenring 5 aufnimmt und zwecks Montage der Lageranordnung das Abschieben des Lagerinnenrings 5 in axiale Richtung a zulässt. Daneben werden auch die weiteren Bauelemente 8, 10, 11 und 18 an jeweiligen radial innenliegenden zylindrischen Sitzflächen (der Sprengring 8 hat hierbei eine radial innenliegende Auflagefläche 9) vom Montageelement 6 gehalten; sie sind sämtlich axial abschiebbar gehalten. Hierfür weist das Montageelement 6 eine zylindrische Außenfläche 7 auf, die von entsprechender Oberflächenqualität sein kann, um zwecks Montage ein leichtes Abschieben der gesamten Lageranordnung 1 mit all den genannten Bauteilen in axiale Richtung a zu ermöglichen.

Ein weiterer sehr vorteilhafter Aspekt der beschriebenen Lösung ist, dass bei Abschieben der Lageranordnung 1 vom Montageelement 6 in axiale Richtung nach rechts alle Bauteile der Lageranordnung, d. h. die Bauteile 4, 8, 10, 11, 12, 13, 14, 16 und 18 eine bauliche Einheit bilden, die als Ganzes gehandhabt werden und mit einem Abschiebevorgang vom Montageelement 6 montiert werden kann. Es sei in diesem Zusammenhang angemerkt, dass die genannten Bauteile 4, 8, 10, 11, 12, 13, 14, 16 und 18 nicht alle gleichzeitig vorhanden sein müssen; es liegt schon dann eine bauliche Einheit im erläuterten Sinne vor, wenn neben dem Lager 4 mindestens ein weiteres der genannten Bauteile vorhanden ist.

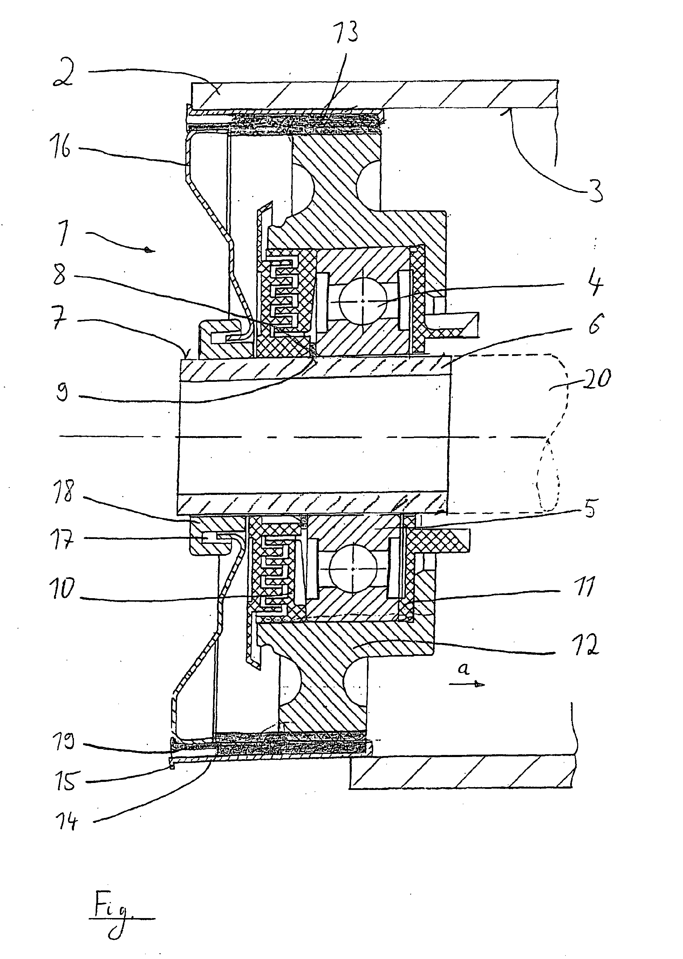

Der Tragrollenmantel 2 ist als hohlzylindrisches Bauteil, also als Rohr, ausgebildet, wobei in beiden axialen Endbereichen je eine Lageranordnung 1 angeordnet ist, wie sie in Fig. 1 zu sehen ist. Das Elastomer- bzw. Gummimaterial der Dämpfungsschicht 13 kann mit der Hülse 14 und/oder mit dem Stützkörper 12 durch einen Spritzgießprozess oder durch einen Vulkanisationsprozess direkt verbunden sein.

### Bezugszeichenliste

- 1: Lageranordnung
- 2: Tragrollenmantel
- 3: innenzylindrische Fläche
- 4: Lager (Wälzlager)
- 5: Lagerinnenring
- 6: Montageelement
- 7: zylindrische Außenfläche
- 8: Sprengring
- 9: radial innenliegende Auflagefläche
- 10: Dichtelement
- 11: Dichtelement
- 12: Stützkörper
- 13: Dämpfungsschicht
- 14: Hülse
- 15: flanschartige Verbreiterung
- 16: Deckel
- 17: nutartig ausgebildeter Spalt
- 18: Dichtelement
- 19: axial vorspringender Abschnitt
- 20: Welle

- a: axiale Richtung

## Patentansprüche

1. Lageranordnung (1) für eine Tragrolle, mit einem zumindest abschnittsweise hohlzylindrisch ausgebildeten Tragrollenmantel (2) mit einer innenzylindrischen Fläche (3) und mit mindestens einem den Tragrollenmantel (2) lagernden Lager (4), wobei das Lager (4) einen Lagerinnenring (5) aufweist, wobei die Lageranordnung (1) ein Montageelement (6) umfasst, das den Lagerinnenring (5) aufnimmt und zwecks Montage der Lageranordnung das Abschieben des Lagerinnenrings (5) in axiale Richtung (a) zulässt,
wobei das Lager (4) radial von einem Stützkörper (12) umgeben ist, wobei der Stützkörper (12) in seinem radial äußeren Bereich an den Tragrollenmantel (2) grenzt, **dadurch gekennzeichnet, dass** zwischen dem radial äußeren Bereich des Stützkörpers (12) und der innenzylindrischen Fläche (3) des Tragrollenmantels (2) eine Dämpfungsschicht (13) angeordnet ist, wobei die Dämpfungsschicht (13) von einer Hülse (14) umgeben wird, die in die innenzylindrische Fläche (3) des Tragrollenmantels (2) einschiebbar ist.

2. Lageranordnung nach Anspruch 1, **dadurch gekennzeichnet, dass** das Montageelement (6) eine zylindrische Außenfläche (7) aufweist.

3. Lageranordnung nach Anspruch 2, **dadurch gekennzeichnet, dass** das Montageelement (6) als rohrförmiger Körper ausgebildet ist.

4. Lageranordnung nach einem der Ansprüche 1 bis 3, **dadurch gekennzeichnet, dass** in einem axialen Endbereich des Lagerinnenrings (5) ein Sprengring (8) angeordnet ist, der mit einer radial innenliegenden Auflagefläche (9) auf der Außenfläche (7) des Montageelements (6) in axiale Richtung (a) gleiten kann.

5. Lageranordnung nach einem der Ansprüche 1 bis 4, **dadurch gekennzeichnet, dass** in mindestens einem axialen Endbereich des Lagerinnenrings (5) ein Dichtelement (10, 11) angeordnet ist, das zusammen mit dem Lagerinnenring (5) auf dem Montageelement (6) in axiale Richtung (a) verschiebbar angeordnet ist.

6. Lageranordnung nach einem der Ansprüche 1 bis 5, **dadurch gekennzeichnet, dass** die Hülse (14) an einem axial Ende eine sich radial nach außen erstreckende flanschartige Verbreiterung (15) aufweist.

7. Lageranordnung nach Anspruch 6, **dadurch gekennzeichnet, dass** die sich radial nach außen erstreckende flanschartige Verbreiterung (15) zur Anlage an ein axiales Ende des Tragrollenmantels (2) ausgebildet ist.

8. Lageranordnung nach einem der Ansprüche 1 bis 7, **dadurch gekennzeichnet, dass** die Hülse (14) im montierten Zustand mit Presspassung in dem Tragrollenmantel (2) sitzt.

9. Lageranordnung nach einem der Ansprüche 1 bis 8, **dadurch gekennzeichnet, dass** sie weiterhin einen Deckel (16) aufweist, der mit dem Stützkörper (12) oder der Dämpfungsschicht (13) drehfest verbunden ist.

10. Lageranordnung nach Anspruch 9, **dadurch gekennzeichnet, dass** der Deckel (16) in seinem radial innenliegenden Endbereich in einem nutartig ausgebildeten Spalt (17) angeordnet ist, der in ein Dichtelement (18) eingebracht ist.

11. Lageranordnung nach Anspruch 10, **dadurch gekennzeichnet, dass** das Dichtelement (18) zusammen mit dem Lagerinnenring (5) auf dem Montageelement (6) in axiale Richtung (a) verschiebbar angeordnet ist.

12. Lageranordnung nach einem der Ansprüche 9 bis 11, **dadurch gekennzeichnet, dass** der Deckel (16) von einem axial vorspringenden Abschnitt (19) der Dämpfungsschicht (13) radial eingefasst wird.

13. Lageranordnung nach einem der Ansprüche 1 bis 12, **dadurch gekennzeichnet, dass** die Dämpfungsschicht (13) aus einem Elastomer besteht.

14. Lageranordnung nach Anspruch 13, **dadurch gekennzeichnet, dass** die Dämpfungsschicht (13) aus Polyurethan besteht.

15. Lageranordnung nach einem der Ansprüche 1 bis 14, **dadurch gekennzeichnet, dass** die genannten Bestandteile derselben als bauliche Einheit ausgebildet sind, die axial (a) verschieblich auf dem Montageelement (6) angeordnet sind.

## Claims

1. Bearing arrangement (1) for a load-bearing roller, with a load-bearing-roller casing (2) which is of hollow-cylindrical design at least in sections and has an inner-cylindrical surface (3), and with at least one bearing (4) supporting the load-bearing-roller casing (2), wherein the bearing (4) has a bearing inner race (5), wherein the bearing arrangement (1) comprises an installation element (6) which receives the bearing inner race (5) and, for the purpose of installing the bearing arrangement, permits the bearing inner race (5) to be pushed away in the axial direction (a), wherein the bearing (4) is surrounded radially by a support body (12), wherein the radially outer region of the support body (12) is adjacent to the load-bearing-roller casing (2), **characterized in that** a damping layer (13) is arranged between the radially outer region of the support body (12) and the inner-cylindrical surface (3) of the load-bearing-roller casing (2), wherein the damping layer (13) is surrounded by a sleeve (14) which is pushable into the inner-cylindrical surface (3) of the load-bearing-roller casing (2).

2. Bearing arrangement according to Claim 1, **characterized in that** the installation element (6) has a cylindrical outer surface (7).

3. Bearing arrangement according to Claim 2, **characterized in that** the installation element (6) is designed as a tubular body.

4. Bearing arrangement according to one of Claims 1 to 3, **characterized in that** a snap ring (8) is arranged in an axial end region of the bearing inner race (5), which snap ring can slide by means of a radially inner supporting surface (9) on the outer surface (7) of the installation element (6) in the axial direction (a).

5. Bearing arrangement according to one of Claims 1 to 4, **characterized in that** a sealing element (10, 11) is arranged in at least one axial end region of the bearing inner race (5), said sealing element, together with the bearing inner race (5), being arranged displaceably on the installation element (6) in the axial direction (a).

6. Bearing arrangement according to one of Claims 1 to 5, **characterized in that** an axial end of the sleeve (14) has a flange-like widened portion (15) extending radially outwards.

7. Bearing arrangement according to Claim 6, **characterized in that** the flange-like widened portion (15) extending radially outwards is designed for bearing against an axial end of the load-bearing-roller casing (2).

8. Bearing arrangement according to one of Claims 1 to 7, **characterized in that**, in the fitted state, the sleeve (14) sits with a press fit in the load-bearing-roller casing (2).

9. Bearing arrangement according to one of Claims 1 to 8, **characterized in that** said bearing arrangement furthermore has a cover (16) which is connected to the support body (12) or to the damping layer (13) for conjoint rotation.

10. Bearing arrangement according to Claim 9, **characterized in that** the radially inner end region of the cover (16) is arranged in a gap (17) which is designed in the manner of a groove and is introduced into a sealing element (18).

11. Bearing arrangement according to Claim 10, **characterized in that** the sealing element (18), together with the inner bearing race (5), is arranged displaceably in the axial direction (a) on the installation element (6).

12. Bearing arrangement according to one of Claims 9 to 11, **characterized in that** the cover (16) is enclosed radially by an axially projecting section (19) of the damping layer (13).

13. Bearing arrangement according to one of Claims 1 to 12, **characterized in that** the damping layer (13) consists of an elastomer.

14. Bearing arrangement according to Claim 13, **characterized in that** the damping layer (13) consists of polyurethane.

15. Bearing arrangement according to one of Claims 1 to 14, **characterized in that** the abovementioned components of same are designed as a structural unit arranged in an axially (a) displaceable manner on the installation element (6).

## Revendications

1. Agencement de palier (1) pour un rouleau porteur, comprenant une enveloppe de rouleau porteur (2) réalisée au moins en partie sous forme cylindrique creuse, avec une surface cylindrique interne (3) et au moins un palier (4) supportant l'enveloppe du rouleau porteur (2), le palier (4) présentant une bague de palier interne (5), l'agencement de palier (1) comprenant un élément de montage (6) qui reçoit la bague de palier interne (5) et qui permet, aux fins du montage de l'agencement de palier, le décalage de la bague de palier interne (5) dans la direction axiale (a),
le palier (4) étant entouré radialement par un corps de support (12), le corps de support (12) étant adjacent à l'enveloppe du rouleau porteur (2) dans sa région radialement externe, **caractérisé en ce qu'**entre la région radialement externe du corps de support (12) et la surface cylindrique interne (3) de l'enveloppe du rouleau porteur (2) est disposée une couche d'amortissement (13), la couche d'amortissement (13) étant entourée par une douille (14) qui peut être enfoncée dans la surface cylindrique interne (3) de l'enveloppe du rouleau porteur (2).

2. Agencement de palier selon la revendication 1, **caractérisé en ce que** l'élément de montage (6) présente une surface externe cylindrique (7).

3. Agencement de palier selon la revendication 2, **caractérisé en ce que** l'élément de montage (6) est réalisé sous forme de corps de forme tubulaire.

4. Agencement de palier selon l'une quelconque des revendications 1 à 3, **caractérisé en ce que**, dans une région d'extrémité axiale de la bague de palier interne (5), est disposé un jonc (8) qui peut glisser avec une surface d'appui radialement interne (9) sur la surface externe (7) de l'élément de montage (6) dans la direction axiale (a).

5. Agencement de palier selon l'une quelconque des revendications 1 à 4, **caractérisé en ce que** dans au moins une région d'extrémité axiale de la bague de palier interne (5) est disposé un élément d'étanchéité (10, 11) qui est disposé, conjointement avec la bague de palier interne (5), de manière déplaçable dans la direction axiale (a) sur l'élément de montage (6).

6. Agencement de palier selon l'une quelconque des revendications 1 à 5, **caractérisé en ce que** la douille (14) présente sur une extrémité axiale un élargissement (15) de type bride s'étendant radialement vers l'extérieur.

7. Agencement de palier selon la revendication 6, **caractérisé en ce que** l'élargissement (15) de type bride s'étendant radialement vers l'extérieur est réalisé de manière à s'appliquer contre une extrémité axiale de l'enveloppe du rouleau porteur (2).

8. Agencement de palier selon l'une quelconque des revendications 1 à 7, **caractérisé en ce que** la douille (14) repose dans l'état monté avec un ajustement serré dans l'enveloppe du rouleau porteur (2).

9. Agencement de palier selon l'une quelconque des revendications 1 à 8, **caractérisé en ce qu'**il présente en outre un couvercle (16) qui est connecté de manière solidaire en rotation au corps de support (12) ou à la couche d'amortissement (13).

10. Agencement de palier selon la revendication 9, **caractérisé en ce que** le couvercle (16) est disposé dans sa région d'extrémité située radialement à l'intérieur dans une fente (17) réalisée en forme de rainure, qui est pratiquée dans un élément d'étanchéité (18).

11. Agencement de palier selon la revendication 10, **caractérisé en ce que** l'élément d'étanchéité (18) est disposé, conjointement avec la bague de palier interne (5) de manière déplaçable dans la direction axiale (a) sur l'élément de montage (6).

12. Agencement de palier selon l'une quelconque des revendications 9 à 11, **caractérisé en ce que** le couvercle (16) est entouré radialement par une portion saillant axialement (19) de la couche d'amortissement (13).

13. Agencement de palier selon l'une quelconque des revendications 1 à 12, **caractérisé en ce que** la couche d'amortissement (13) se compose d'un élastomère.

14. Agencement de palier selon la revendication 13, **caractérisé en ce que** la couche d'amortissement (13) se compose de polyuréthanne.

15. Agencement de palier selon l'une quelconque des revendications 1 à 14, **caractérisé en ce que** lesdits constituants de celui-ci sont réalisés sous forme d'unité structurelle et sont disposés de manière déplaçable axialement (a) sur l'élément de montage (6).
